# EUROPEAN PATENT APPLICATION

(11) **EP 4 015 068 A1**
(43) Date of publication of application: **22.06.2022**
(21) Application number: 20216211.1
(22) Date of filing: 21.12.2020
(51) Int. Cl.: B01D 61/12

(54) **CONTROL METHOD FOR A MEMBRANE FILTER SYSTEM AND MEMBRANE FILTER SYSTEM**

(71) Applicant: Grundfos Holding A/S, 8850 Bjerringbro (DK)
(72) Inventor: Dominiak, Dominik Marek, 8850 Bjerringbro (DK); Ople Villacorte, Loreen, 8850 Bjerringbro (DK); Yangali-Quintanilla, Victor Augusto, 8850 Bjerringbro (DK); D'Antonio, Sébastien, 8850 Bjerringbro (DK); Hansen, Simon, 8850 Bjerringbro (DK); Aarestrup, Jan Carøe, 8850 Bjerringbro (DK)
(74) Representative: Patentanwälte Vollmann Hemmer Lindfeld Partnerschaft mbB

(57) **Abstract**

The invention refers to a control method used in a membrane filter system operated in iterative filtration cycles, said cycles comprising a production period and a following flushing, wherein a setting of a crossflow on the entrance side (4) of a membrane (2) in the production period is controlled such that the energy consumption (E) per filtration cycle reaches an optimum, and to a corresponding membrane filter system.

## Description

The invention refers to a control method for or used in a membrane filter system and to a membrane filter system.

Membrane filter systems are for example used as reverse osmosis systems or nanofiltration systems. In these systems a clogging or fouling of the membrane may occur. Therefore, from time to time a cleaning is required which may be a flushing, physical cleaning and/or chemical cleaning in place. Thus, the system is operated in iterative filtration cycles, which cycles each comprise a production period and a following flushing. For economic reasons it is intended to minimize the cleaning and/or flushing time and to prolong the production period.

It is the object of the present invention to provide a control method for a membrane filter system and a respective membrane filter system allowing a maximized output at minimum costs.

This object is achieved by a control method having the features defined in claim 1 and a membrane filter system having the features defined in claim 13. Preferred embodiments are defined in the dependent subclaims, the following description and the accompanying drawings.

The control method according to the invention is a control method for a membrane filter system, i.e. used in a membrane filter system. The membrane filter system is system which is operated in iterative filtration cycles which each comprise a production period and a following flushing. The respective control of the filtration cycle may also be part of the control method according to the invention. During the production cycles there is a feed applied to an entrance side of the membrane and a permeate flow leaving the membrane on the opposite outlet side of the membrane. Furthermore, there is a retentate or concentrate flow along the entrance side out of an concentrate outlet. This concentrate flow is a crossflow along one side of the membrane, i.e. the entrance side, and a flow not passing the membrane. Either this concentrate or the permeate or both may form the desired output of the filter system. At the end of the production period the feed flow is stopped and instead a flushing is carried out, preferably on the entrance side or along the entrance side of the membrane to clean the membrane, in particular to remove fouling or clogging from the membrane.

During the production period according to the invention there is provided a crossflow on the entrance side or along the entrance side of the membrane, in particular a crossflow along the membrane surface. This crossflow according to the invention is defined as the flow at the concentrate outlet or outlets. This crossflow preferably is a flow from the feed inlet towards the concentrate or retentate outlet. However, there may be provided at least one additional inlet and/or outlet to provide a crossflow. This means, the crossflow is not passing the membrane but flowing along the entrance side or entrance surface of the membrane. A part of the flow is passing the membrane towards the permeate outlet. The essential idea of the invention is a control or setting of the described crossflow at the concentrate outlet of at least one membrane during the production period. According to the invention this setting is controlled or adjusted such that the energy consumption per entire filtration cycle reaches an optimum. Thus, it is not just the maximum output of the filter system, which is considered to find the optimum crossflow, but an optimization of the energy consumption per filtration cycle is carried out. Thereby, the total energy consumption during the production period and the energy consumption for the flushing are considered or accumulated. For example, an increased fouling of the membrane will require a more extensive flushing resulting in an increased energy consumption and/or a longer interruption of the production. On the other hand, an increased crossflow may further reduce or prevent fouling, but results in an increased energy consumption for providing the crossflow. If an increased fouling would be allowed, this may result in reduced energy consumption for the crossflow, however then more energy would be required to maintain a necessary entrance pressure on the entrance or feed side of the membrane. This shows, there are conflicts in control since an improvement of one cost component may result in a worsening of another cost component. According to the invention the optimum is found by considering the total energy consumption of the filtration cycle which represents the costs for producing a certain amount of output of the filter system.

Preferably said optimum of the energy consumption is a minimum energy consumption. According to this the crossflow setting is optimized or changed until the minimum energy consumption for operation under given conditions is found.

Preferably, the cost optimum or optimum of energy consumption is a long-term optimum representing a stable condition. Thus, it may be that for a certain shorter period of time a further reduction of costs or energy consumption could be achieved but resulting in higher energy consumption later. This preferably should be avoided. Especially, the costs for a longer period may be considered which may implicate higher costs for a shorter period at the beginning. Preferably, the optimum of the energy consumption may be a constant energy consumption over time, in particular a minimum of costs which is constant over time or several filtration cycles. By this, an increase of the energy consumption after several production cycles can be avoided. Such an increase in the end would not be the optimum of energy consumption, in particular the overall minimum energy consumption.

Preferably, the regarded energy consumption is a relative energy consumption per volume of produced permeate or concentrate, depending on the required output of the filtration system. By considering the relative energy consumption it is possible to optimize the costs in relation to the output of the filtration system, i.e., to find an optimum in view of output and energy consumption.

Said crossflow along the entrance side of the membrane is defined as a flow at or out of a concentrate outlet, wherein according to a further preferred embodiment the crossflow is at least partly recirculated, for example by use of a crossflow pump. The crossflow is the retentate or concentrate flow resulting from a feed flow towards the membrane minus the permeate flow passing the membrane. In a possible embodiment a part of this crossflow may be recirculated, i.e. a part of the retentate flow is recirculated towards the feed side so that a circulating flow along the entrance side or surface of the membrane is provided as a crossflow. There may be additional in- and outlets for such a circulating crossflow on the entrance side of the membrane, i.e., on a space or conduit containing the entrance side of the membrane.

In a preferred embodiment according to the method the crossflow is set by adjusting the flow or speed of a crossflow pump, which crossflow pump at least partly recirculates the crossflow. There may be a circulation line connecting the concentrate outlet and the feed inlet of the membrane arrangement or unit, providing a loop. In this circulation line according to this preferred embodiment there is arranged the circulation or crossflow pump recirculating a part of the concentrate flow back to the feed side of the membrane. The crossflow pump provides an adjustable flow, for example by adjusting the speed of the pump. Thus, the crossflow can be set by adjusting the flow provided by the crossflow pump, in particular by changing the speed of the pump.

The crossflow may have an influence on the ratio of the permeate flow to the feed or entrance flow, i.e., the flow entering the entrance side of the filtration system. This means, the crossflow or a part of the crossflow defines the recovery level, which is the ratio of permeate flow to entrance flow. At a constant feed, by reducing such crossflow which is defined by a concentrate or retentate outlet flow the permeate flow will change. The recovery level, furthermore, may be changed by changing the feed flow at a constant retentate outlet flow. The crossflow optimized may be a crossflow partly or fully circulating on the entrance side of the membrane and/or may be a crossflow defined by the retentate outlet flow. The part of the crossflow which is not recirculated influences the recovery level as defined before. Thus, an optimization of the recovery level is possible by setting the crossflow in form of a retentate outlet flow as explained above. The setting of the crossflow may include a setting of a ratio of two flows, for example the feed flow and the retentate flow and/or the ratio of the retentate flow to the permeate flow. When changing the recovery level either the feed and/or the retentate flow may be changed, thus, there is a change in the crossflow settings, namely in the relation between feed and retentate flow.

According to a further preferred embodiment said membrane filter system for which the control method is used comprises at least one membrane having a pore size smaller than 10 nm, further preferred smaller than 5 nm. Preferably, the filter system may be a nano filtration system (NF system), reverse-osmosis system (RO system), an electrodialysis-system (ED system) or a forward-osmosis system (FO system). These all are systems having a small pore size of the membrane. For those membrane systems of small pore size, the optimization of the crossflow may be of particular benefit.

As described before, the crossflow may be defined as a recovery level defining the ratio of permeate flow to feed flow. This means, in the meaning of the present invention an optimization or setting of the crossflow includes a setting of the recovery level, i.e. an optimization of the recovery level according to which the energy consumption per filtration cycle reaches an optimum or minimum as discussed above. The recovery level may be changed or adjusted for example by adjusting the opening degree of a valve, in particular a valve at a concentrate outlet. Without a recirculation this valve would directly influence the crossflow. However, with a recirculation line and a crossflow pump as described above the crossflow can be set or adjusted independently of the recovery rate. A valve as mentioned before may be provided in addition to the recirculation line, preferably in a concentrate outlet downstream the branch of the recirculation line, such that the valve recirculated crossflow is not flowing through said valve.

According to a possible embodiment of the control method, said setting of the crossflow may be varied stepwise for different filtration cycles and the energy consumption for the different filtration cycles is compared to find an optimum, preferably the relative energy consumption for the different filtration cycles is compared. Thus, the optimization of the crossflow may take several filtration cycles with changes of the setting between the filtration cycles to compare the impact of the change in setting on the energy consumption. Thus, the control of the crossflow setting may be carried out in an iterative manner to find the desired optimum.

According to the method, in a further possible embodiment when stepwise varying the setting, said setting is kept constant for a few filtration cycles. This means, the setting is not changed for every filtration cycle, but after a certain number of filtration cycles, for example three or five filtration cycles. However, any possible number of filtration cycles may be taken. With the constant setting of the crossflow a trajectory for the energy consumption over time is generated for the number of filtration cycles. Then, the optimum for the energy consumption is found for the obtainable limit crossflow or flow ratio, as discussed above, with a gradient of the trajectory below a predefined limit. Preferably the energy consumption is constant over the number of filtration cycles, i.e., the gradient of the trajectory is substantially zero. By this, the optimum for the energy consumption with a stability over time can be found. With a too high crossflow, for example, the fouling can be prevented, however, the energy consumption is not at a minimum. With a too low crossflow an increase of fouling likely will occur after several filtration cycles resulting in an increase of energy consumption. Thus, it is desired to find the crossflow with a minimum stable energy consumption.

Preferably, beginning with a starting level a crossflow is reduced in an iterative manner after a number of filtration cycles as long as the gradient of the trajectory of the energy consumption remains below the predefined limit, preferably, the gradient is substantially zero, i.e., the energy consumption maintains stable over several filtration cycles. This method is preferred for optimizing the crossflow setting.

In case that the crossflow is defined by a recovery level defining the ratio of permeate flow to feed flow, as explained above, according to a further possible embodiment of the method, the recovery level may be increased beginning with a starting level in an iterative manner after a number of filtration cycles as long as the gradient of the trajectory of the energy consumption remains below a predefined minimum, preferably substantially zero, such that the energy consumption remains constant over the number of filtration cycles. Thus, also when controlling the setting of a recovery level the optimum for the energy consumption is found as a constant minimum energy consumption.

According to a further preferred embodiment the energy consumption per filtration cycle includes the total energy consumption for production, flushing and cleaning of the filter system. This, preferably, is the overall energy consumption required for producing a certain output volume, which may be the concentrate and/or the permeate of the membrane system. As described above, preferably the regarded energy consumption is the total relative energy consumption per volume of produced permeate or concentrate. Preferably, further costs in addition to the energy consumption may be considered as an energy equivalent in the control method. For example, the costs for brine or retentate treatment and/or for cleaning agents or similar may be regarded as an energy equivalent, so that at the end a cost optimization is achieved, the crossflow setting is controlled to achieve stable minimum costs.

For the control the energy consumption and possible energy equivalents may be recorded by suitable energy recording means. Furthermore, the necessary hydraulic values may be recorded by suitable recording or sensing means, for example flow sensors for detecting the volume flow of feed, crossflow, permeate flow and/or retentate flow. Instead of flow sensors the respective volume flows may be evaluated or output by the control means of pumps providing the respective flows.

Apart from the described control method a membrane filter system is subject of the present invention. Preferred embodiments of the control method as described above may be regarded as preferred embodiments of the membrane filter system and preferred embodiments described in relation to the membrane filter system may be regarded as preferred embodiments of the method, too.

The membrane filter system according to the invention comprises at least one membrane, at least one flow regulating device and a control device for controlling the flow regulating device to set a crossflow at a concentrate outlet of the membrane during a production period of the membrane filter system. The control device of the membrane filter system may be configured to control the filter system such that the filtration is carried out in filtration cycles each consisting of a production period and a following flushing. The crossflow may be fully or partly recirculated on the entrance side or for example a concentrate or retentate outlet flow, i.e. not recirculated. This not recirculated crossflow may define a recovery level being the ratio of a permeate flow to a feed flow. The flow regulating device may influence the crossflow directly or indirectly. The at least one flow regulating device may regulate a feed flow, a permeate flow, a retentate flow and/or a recirculated part of the crossflow. By the regulating device a ratio of two flows may be changed, for example the ratio of permeate flow to feed flow.

According to the invention said control device is configured such that the crossflow in the production period is regulated in a manner that the energy consumption per filtration cycle reaches an optimum. This optimum preferably is a minimum or a stable minimum, i.e., the minimum of the energy consumption which maintains stable over several filtration cycles. For further details and aspects, it is referred to the afore-mentioned description of the control method.

The at least one membrane preferably has a pore size smaller than 10 nm, further preferred smaller than 5 nm. Especially, the membrane filter system may be a nano-filtration system, a reverse-osmosis system, an electrodialysis system or a forward-osmosis system. These are filter systems comprising at least one membrane having a small pore size. The control of the crossflow or setting of the crossflow particularly is of advantage for those filter systems.

The at least one flow regulating device may be a valve or a pump, preferably a pump with variable speed. The valve may have a variable opening degree for adjusting a flow, for example an outlet flow of concentrate not being recirculated. A flow can be regulated or adjusted by changing an opening degree of a valve or changing the speed of a pump, for example in a pump driven by an electric motor with frequency converter. According to a possible embodiment of the invention such pump may be a crossflow pump recirculating at least a part of the crossflow along the entrance side of the at least one membrane. For example, the crossflow pump may circulate a part of the retentate back from the concentrate outlet to an entrance or feed side so that a circulating flow on the entrance side of the membrane is provided. In a further possible embodiment, a pump acting as a flow regulating device may be a feed pump providing a feed flow to said at least one membrane, i.e., towards the entrance side of the membrane filter system. The feed pump is feeding an entrance flow to and through the membrane filter. By adjusting the feed flow for example, the recovery level may be influenced. Furthermore, it is possible to influence a crossflow directly or indirectly, particularly a flow through a concentrate or retentate outlet. The flow regulating device is connected to the control device such that the control device can change the crossflow by controlling or adjusting the flow regulating device, for example setting the speed of a pump and/or the opening degree of a valve. For setting or controlling the cross flow, several pumps and/or valves may be controlled by the control device in combination. This may be preferred for example to adjust a flow ratio as discussed above.

According to a further possible embodiment of the invention said control device comprises energy recording means or receives data from such energy recording means. The energy recording means are configured for recording the energy consumption of the filter system. Further preferably the energy recording means and/or the control device are configured to record or calculate a relative energy consumption per volume of produced permeate or concentrate. For detecting the volume of produced permeate or concentrate respective flow sensors may be provided and connected to the control device to deliver the necessary data. Instead of flow sensors, pumps providing the respective flows may be used to output flow values for the control device.

Furthermore, flow sensors may be used to provide a feedback control of a crossflow set by the control device to ensure that the crossflow is kept on the desired level. Furthermore, the control device may be configured to allow the input of energy equivalents representing further costs occurring during the filtration and/or cleaning process of the filter system. This allows to not just carry out an optimization in view of energy consumption but in view of the overall costs, in particular the overall costs per volume produced by the filter device. Such additional costs for example may be costs for cleaning agents. The costs may be manually input into the control device having respective input means allowing to input such values. Furthermore, it may be possible that the control device has an interface to receive respective data from an external or connected control means.

According to a further preferred embodiment the control device of the membrane filter system is configured such that it controls the flow regulating device to adjust the setting of a crossflow by a control method as described above. In view of this it is referred to the foregoing description of the method.

In the following a preferred embodiment of the invention is described by way of example with reference to the figures. In these:
Fig. 1 shows a membrane filter system according to the invention.
Fig. 2 is a diagram showing the energy consumption for different cross-flows.
Fig. 3 is a diagram showing the setting of the crossflow.
Fig. 4 is a diagram showing the energy consumption for different recovery levels, and
Fig. 5 is a diagram showing the setting of the recovery rate.

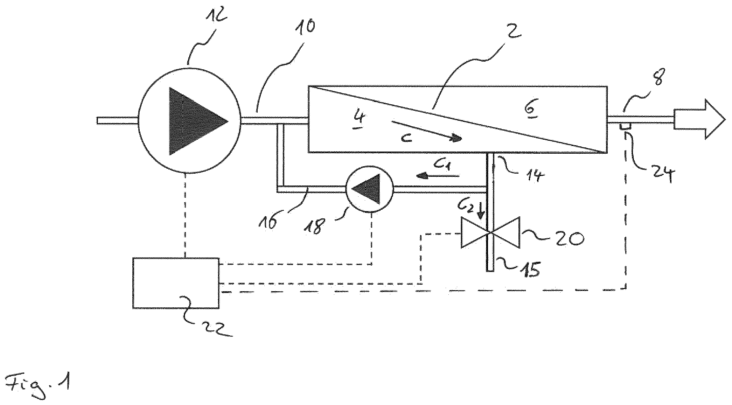

The membrane filter system as schematically shown in Fig. 1 comprises at least one membrane 2 having an entrance side 4 and an outlet side 6. The entrance side 4 and the outlet side 6 may be defined by housing containing the at least one membrane 2. The outlet side 6 is the outlet for the filtrate or permeate and connected to a permeate outlet 8. The entrance side 4 is connected to a feed line 10 having a feed pump 12. The feed line 10 preferably opens to the entrance side 4 at a side or edge of the membrane 2. On the other side or edge there is arranged a concentrate or retentate outlet 14. Thus, the flow from the feed line 10 towards the concentrate outlet 14 provides a crossflow c along the entrance side 4 or parallel along the entrance surface of the membrane 2. A part of the liquid passes the membrane 2 towards the outlet side 6 and the permeate outlet 8.

In this example there is arranged a recirculation line 16 connecting the concentrate outlet 14 and the feed line 10 downwards the feed pump 12. In the recirculation line 16 there is arranged a recirculation or crossflow pump 18. This crossflow pump 18 is recirculating a part c₁ of the crossflow c, i.e. a part of the flow of the concentrate or brine leaving the entrance side through the concentrate outlet 14. Thus, the crossflow pump 18 provides an additional partial crossflow c₁ along the entrance side 4 in addition to the part c₂ of the crossflow produced by the feed pump and flowing out of a concentrate drain 15. Downstream the branch of the recirculation line 16 there is arranged a valve 20 controlling the partial crossflow c₂ defining the concentrate flow through said concentrate drain 15. The valve 20 may adjust the opening degree of the line towards the concentrate drain 15 and may allow to completely close the concentrate drain 15. If the valve 20 completely closes the concentrate drain 15, the crossflow c would be provided via the recirculation line 16 only since the entire feed flow from the feed line 20 would have to pass the membrane 2 towards the permeate outlet 8.

The filter system comprises a control device 22 connected to the feed pump 12, the crossflow pump 18 and the valve 20 for controlling the pumps 12 and 18 and the valve 20, i.e., to adjust the opening degree of the valve 20 and the speed of the pumps 12 and 18. It must be understood that the control device 22 may control the valve 20 or one of the pumps 12, 18 only, or control the valve 20 and just one of the two pumps 12 and 18. Furthermore, the crossflow pump 18 or the valve 20 may be omitted. Instead of a valve 20 having an adjustable opening degree, for example, there may be provided a fixed flow restriction. However, in all embodiments the control device 22 can control the setting of a crossflow c along the entrance side 4 of the membrane 2, i.e. a concentrate flow at the concentrate outlet 14 by controlling at least one pump 12, 18 and/or at least one valve 20.

Furthermore, the system may comprise one or more sensors. In this example the feed flow may be detected by or output from the feed pump 12 and the respective information is transferred to the control device 22 via a data connection between the feed pump 12 and the control device 22. However, there may be an additional flow sensor to detect the feed flow. Furthermore, in this example there is shown a flow sensor 24 on the permeate outlet 8 for detecting the volume flow of filtrate or permeate leaving the filter device. The flow sensor 24 is connected to the control device 22 for transmitting data representing the volume flow in the permeate outlet 8 to the control device 22. Depending on the desired setting of the crossflow c the flow sensor 24 may not be necessary and may be omitted. Instead, it would be possible to arrange further flow sensors, for example on the recirculation line 16 and/or the concentrate outlet 14, in particular downwards the branch of the circulation line 16, i.e. for detecting the flow through the concentrate drain 15. Furthermore, it would be possible to detect or provide the recirculation flow c₁ by the control of the crossflow pump 18. The control device 22 may have an interface for communication with external or further devices.

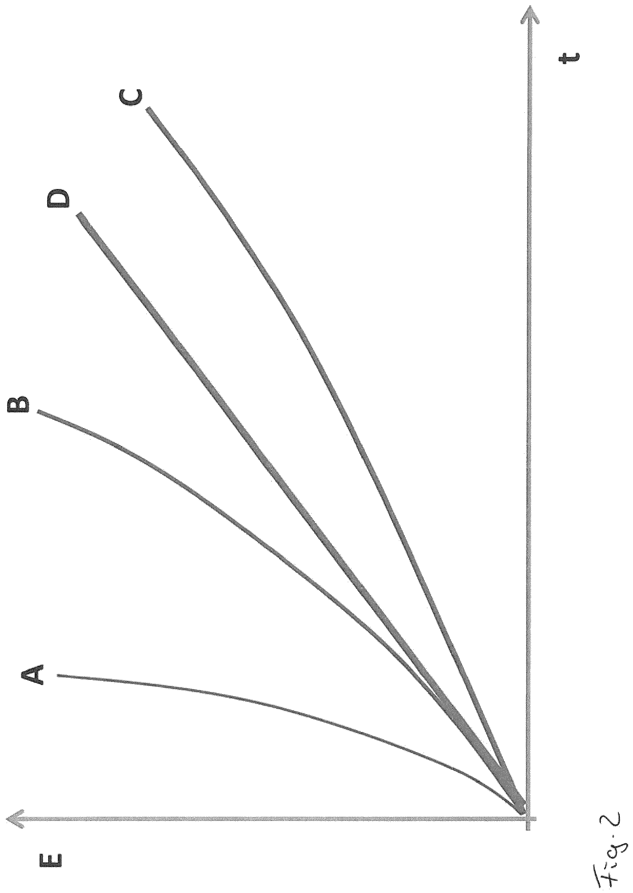

According to the invention the control device 22 is configured to control a crossflow c or a setting of a crossflow c along the entrance side 4. Fig. 2 is a diagram showing the cumulative energy consumption E over time t. The energy consumption E preferably is a relative energy consumption per volume of permeate flowing through the permeate outlet 8 or concentrate flowing out of the filter device via concentrate drain 15. Whether the volume of the concentrate or the volume of the permeate is regarded, depends on which flow is the desired outlet of the filter device. The energy consumption E comprises the entire energy consumption for a production cycle and a following flushing of the filter with stopping the production. It particularly comprises the energy needed for driving the pumps 12 and 18. Fig. 2 shows the development of the energy consumption E for four different crossflow levels A, B, D und C. The curve A represents nearly no crossflow. In this case there occurs a fouling of the membrane 2 by which the flow resistance increases and, thus, the energy consumption for pressurizing the fluid, i.e. in particular the energy consumption of the feed pump 12 increases quickly. The curve B represents a too little crossflow. Also, with this crossflow which may be provided by the recirculation pump 18 there occurs a fouling of the membrane 2 resulting in an increase of required energy for pressurizing the fluid. The curve C represents the optimum crossflow in this example having the minimum increase in energy consumption over time. This curve has the lowest possible slope of the cumulative energy curve. The curve D shown in Fig. 2 illustrates what happens when the crossflow is too high. In this case the cumulative energy curve is very straight since the fouling develops very slowly. However, the overall rate of energy consumption E is higher than the optimum, since too much energy is used for providing the higher crossflow, for example by driving the recirculation pump 18 with a velocity higher than necessary.

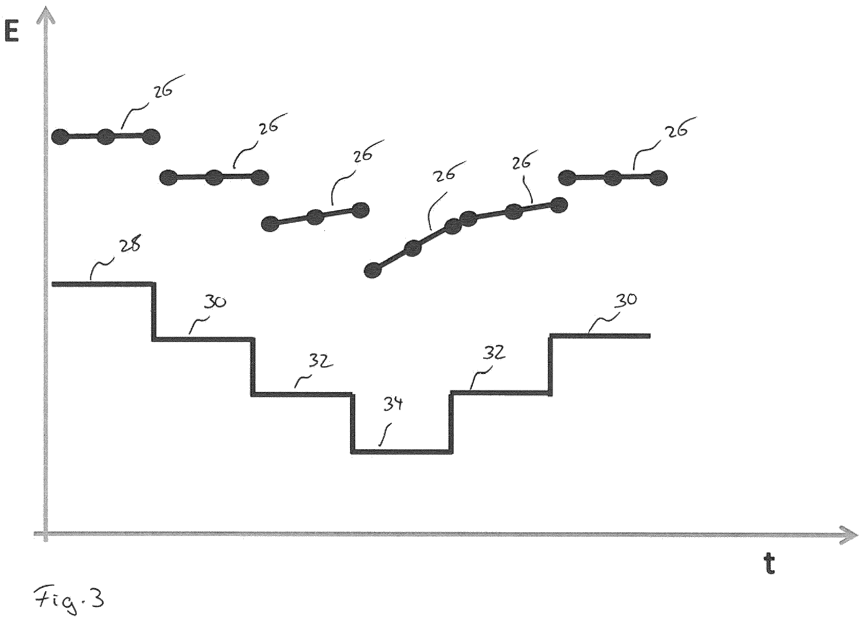

To find the optimum crossflow the control device 22 carries out a control method for setting the crossflow as explained with reference to Fig. 3. Fig. 3 shows the overall or cumulative energy consumption E over time t similar as Fig. 2. It must be understood that the total energy consumption as shown in Figs. 2 and 3 may include energy equivalents representing further costs occurring, for example costs for cleaning agents required to remove a fouling from the membrane and/or costs for treatment of brine or concentrate, respectively. By adding such energy equivalents representing further costs it is possible to take these further costs into consideration in addition to the energy consumption. Thus, by this method not only the energy consumption can be optimized, but the total costs per volume of the filter outlet can be optimized.

In Fig. 3 the lower curve shows the different crossflow levels, for example provided by the recirculation pump 18. Alternatively, or in addition it may be possible to adjust the crossflow by changing the speed of the feed pump 12 and/or adjusting the opening degree of the valve 20. The upper curves in Fig. 3 represent the energy consumption over the time t. Each dot represents the total energy consumption for one filtration cycle (production + flushing). It is preferred to start with a high or excessive setting of the crossflow and to drive the crossflow down in steps of certain duration. This means, the crossflow is kept constant for a few or several filtration cycles, in this case three filtration cycles, each consisting of a production period and a following flushing. By this a cumulative energy consumption curve or trajectory 26 can be assessed for each crossflow level. At the beginning for the highest crossflow level 28 the energy consumption curve 26 is substantially horizontal, i.e., the slope is substantially zero and the energy consumption E is substantially constant over time. For the next reduced crossflow level 30 the energy consumption curve 26 remains substantially horizontal. In the next step the crossflow level is further reduced to a crossflow level 32. The slope of the energy consumption curve 26 slightly increases, i.e., the energy consumption E increases over time between the three filtration cycles indicated by the dots on the curve 26. When further reducing the crossflow level to a crossflow level 34 the slope of the energy consumption curve 26 further increases. This is detected by the control device 22, meaning that the total energy consumption becomes worse. Thus, in the next step the crossflow level is again increased to the crossflow level 32. In the result the energy consumption curve 26 again has a smaller slope, i.e., the increase of energy consumption E over time is reduced. With further increasing the crossflow level to the crossflow level 30 the energy consumption curve 26 again becomes flat, i.e., substantially horizontal. Thus, the optimum for the crossflow setting is found, since relatively steady process conditions are found, and the energy consumption increases very slowly from filtration cycle to filtration cycle. Such crossflow setting, i.e., finding the optimum crossflow level may be carried out by the control device 22 from time to time or during a setup procedure of the filtration device, for example after a cleaning in place. Under relatively steady process conditions the optimum crossflow setting changes slowly. With progressing fouling the crossflow setting may be adapted, i.e., a higher crossflow level may be required. Thus, the setting of the crossflow may be repeated in certain time intervals to again optimize the setting.

In the embodiment discussed with reference to Figs. 2 and 3 the crossflow c along the entrance side 4, in particular a crossflow c₁ provided by the recirculation pump 18 has been considered. However, a crossflow may be provided in another way, for example by rotation of the membrane 2 or air scouring. Those methods or systems of continuous physical cleaning may be regarded as an equivalent to a crossflow and the setting of the air flow or rotational speed of the membrane may be carried out in the same way as discussed before.

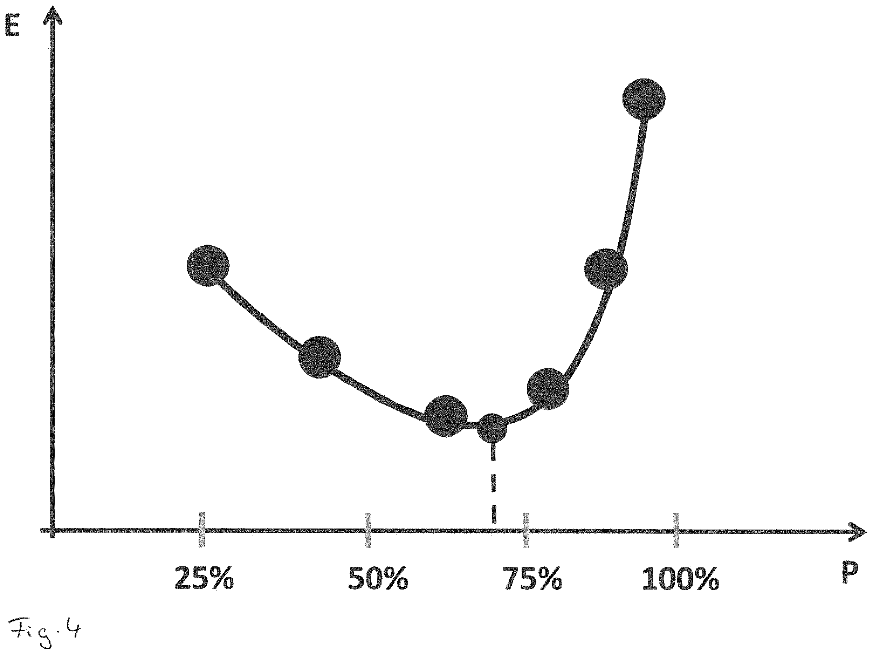

Furthermore, according to the invention a recovery level may define the crossflow c. The recovery level or recovery rate is defined as a ratio of the permeate flow in the permeate outlet 8 to the feed flow, i.e., the volume flow in the inlet line 10. As can be seen in Fig. 4 the energy consumption has a minimum for a certain recovery level, in this example for a recovery level of approximately 70 %. If the recovery level is too low, energy is wasted since waste amounts of brine or retentate must be treated, resulting in higher costs for brine treatment. If the recovery level is too high the higher recovery pushes the system to its limits which results in high energy and cleaning costs. For example, an excessive energy consumption for the feed pump 12 and/or an excessive fouling may occur, requiring a longer or more intensive cleaning like cleaning in place. The recovery level is also defined as a crossflow in the meaning of the present invention since it depends on the crossflow along the entrance side 4 of the membrane 2. The setting of the recovery level may be done in similar manner by the control device 22 as the setting of the crossflow as explained with reference to Fig. 3.

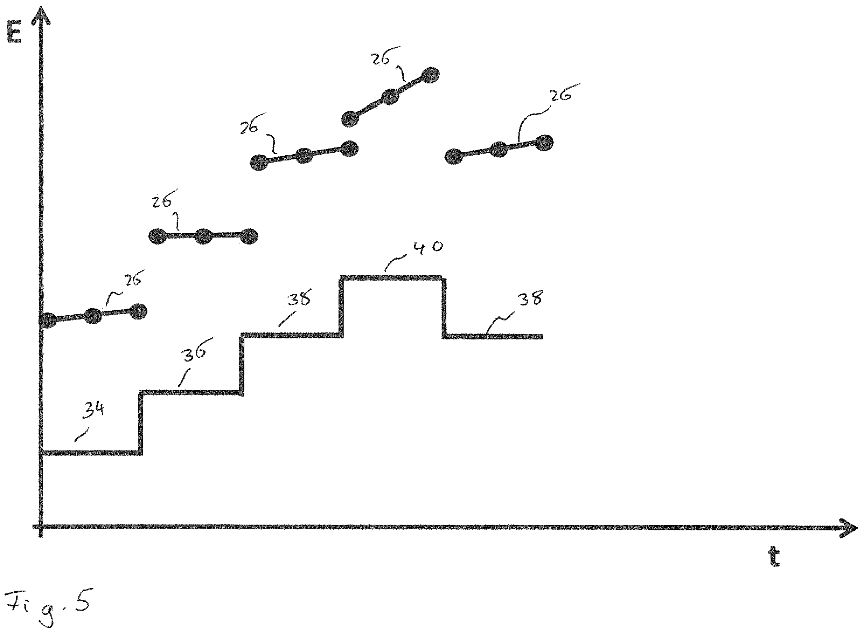

The setting of the recovery level is explained with reference to Fig. 5 in more detail. Fig. 5 shows the total energy consumption E over time t, as shown in the diagram according to Fig. 3. Also, in this diagram the upper curves 26 are energy curves being trajectories discovered during several filtration cycles. In this case three filtration cycles, each consisting of a production period and a following flushing, are regarded. These filtration cycles are shown as dots on the curves 26. The lower curve in Fig. 5 represents different recovery levels 34, 36, 38 and 40. The optimum recovery level is found in an iterative process. The process is started with a relatively low recovery level 34. Several filtration cycles, in this case three filtration cycles, are carried out with this first recovery level 34 and the resulting energy consumption curve or trajectory 26 is discovered. The curve 26 has a small slope. In the next step the recovery level is increased to recovery level 36 and again the energy or cost trajectory 26 is discovered. As can be seen in Fig. 5 the slope of this trajectory 26 is lower, substantially zero. In the next step the recovery level is further increased to a recovery level 38. Then, the resulting energy trajectory 26 again has a higher slope. When further increasing the recovery level to recovery level 40, the slope of the trajectory 26 becomes even greater. This means with this setting the recovery level moves away from the optimum. Thus, in the next step the recovery level is decreased again to the recovery level 38 with the slope of the trajectory 26 decreasing again. The optimum is found for the highest recovery level for which the costs or energy curve or trajectory 26 remains substantially horizontal, i.e., the slope is substantially zero. For this recovery level the costs or energy consumption maintains substantially constant over time. The setup process to find the optimum recovery level may be carried out by the control device 22 in predefined time intervals or for example during a setup process, for example after a cleaning in place.

As can be seen in the examples according to Figs. 3 and 5 according to the invention the crossflow is optimized under cost and energy consumption perspectives allowing to increase the efficiency of the entire filtering process.

### List of reference numerals

- 2: membrane
- 4: entrance side
- 6: outlet side
- 8: permeate outlet
- 10: feed line
- 12: feed pump
- 14: concentrate or retentate outlet
- 15: concentrate drain
- 16: recirculation line
- 18: crossflow pump
- 20: valve
- 22: control device
- 24: flow sensor
- 26: energy consumption curve/energy consumption trajectory
- 28, 30, 32: crossflow level
- 34, 36, 38, 40: recovery level
- E: energy consumption/relative energy consumption
- †: time
- c, c₁, c₂: crossflow
- A, B, C, D: crossflow level

## Claims

1. Control method used in a membrane filter system operated in iterative filtration cycles, said cycles comprising a production period and a following flushing,
**characterized in that**
a setting of a crossflow (c) at a concentrate outlet (14)of a membrane (2) in the production period is controlled such that the energy consumption (E) per filtration cycle reaches an optimum.

2. Control method according to claim 1, **characterized in that** said optimum is a minimum energy consumption (E).

3. Control method according to claim 1 or 2, **characterized in that** the energy consumption (E) is a relative energy consumption per volume of produced permeate or concentrate.

4. Control method according to one of the preceding claims, **characterized in that** said crossflow (c)is defined as a flow out of a concentrate outlet (14), which is at least partly recirculated.

5. Control method according to one of the preceding claims, **characterized in that** the crossflow (c) is set by adjusting the flow or speed of a crossflow pump (18), which crossflow pump (18) at least partly recirculates the crossflow (c).

6. Control method according to one of the preceding claims, **characterized in that** the membrane filter system comprises a membrane (2) having a pore size smaller 10 nm and preferably is a nano-filtration system, a reverse-osmosis system, a electrodialysis system or a forward-osmosis system.

7. Control method according to one of the preceding claims, **characterized in that** the crossflow (c) is defined by a recovery level defining the ratio of permeate flow and a feed flow.

8. Control method according to one of the preceding claims, **characterized in that** said setting is varied stepwise for different filtration cycles and the energy consumption (E) for the different filtration cycles is compared to find the optimum.

9. Control method according to one of the preceding claims, **characterized in that**, when stepwise varying the setting, said setting is kept constant for a number of filtration cycles, a trajectory (26) for the energy consumption (E) over time (t) is generated for this number of filtration cycles and the optimum for the energy consumption (E) is found for the obtainable limit crossflow or flow ratio with a gradient of the trajectory (26) below a predefined limit.

10. Control method according to one of the preceding claims, **characterized in that** beginning with a starting level (28) a crossflow is reduced in an iterative manner after a number of filtration cycles as long as the gradient of the trajectory (26) of the energy consumption (E) remains below the predefined limit.

11. Control method according to one of the preceding claims, **characterized in that** beginning with a starting level the recovery level (34) is increased in an iterative manner after a number of filtration cycles as long as the gradient of the trajectory (26) of the energy consumption (E) remains below the predefined minimum.

12. Control method according to one of the preceding claims, **characterized in that** the energy consumption (E) per filtration cycle includes the total energy consumption for production, flushing and cleaning of the filter system, wherein preferably further costs in addition to the energy consumption are considered as an energy equivalent.

13. Membrane filter system having at least one membrane (2), at least flow regulating device (12, 18, 20) and a control device (22) for controlling the flow regulating device (12, 18, 20) to set a crossflow (c)at a concentrate outlet (14) of the membrane (2) during a production period of the membrane filter system,
**characterized in that**
said control device (22) is configured that the crossflow in the production period is controlled such that the energy consumption (E) per filtration cycle reaches an optimum.

14. Membrane filter system according to claim 13, **characterized in that** the at least one membrane (2) has a pore size smaller 10 nm and the membrane filter system preferably is a nano-filtration system, a reverse-osmosis system, a electrodialysis system or a forward-osmosis system.

15. Membrane filter system according to claim 13 or 14, **characterized in that** the at least one flow regulating device is a valve (20) or a pump (12, 18), preferably a crossflow pump (18) recirculating at least a part (ci) of a crossflow (c) along the entrance side (4) of the at least one membrane (2), or a feed pump (12) providing a feed flow to said at least one membrane (2).

16. Membrane filter system according to one of the claims 13 to 15, **characterized in that** the control device (22) comprises energy recording means recording the energy consumption of the filter system, and preferably a relative energy consumption per volume of produced permeate or concentrate.

17. Membrane filter system according to one of the claims 13 to 16, **characterized in that** the control device is configured such that it controls the flow regulating device by a control method according to one of the claims 1 to 12.
